Europäisches Patentamt

European Patent Office

Office européen des brevets

(19)

(11) Numéro de publication: **0 192 566 B1**

## (12) FASCICULE DE BREVET EUROPÉEN

(45) Date de publication du fascicule du brevet: **12.10.88**

(51) Int. Cl.⁴: **C 06 B 21/00**, G 05 D 9/04

(21) Numéro de dépôt: **86400308.2**

(22) Date de dépôt: **13.02.86**

(54) Procédé et installation pour assurer le transfert d'un fluide contenant un composant explosible.

(30) Priorité: **14.02.85 FR 8502094**

(43) Date de publication de la demande:
**27.08.86 Bulletin 86/35**

(45) Mention de la délivrance du brevet:
**12.10.88 Bulletin 88/41**

(84) Etats contractants désignés:
**CH DE FR GB IT LI NL SE**

(56) Documents cité:
**FR-A-1 530 751**
**US-A-3 027 597**
**US-A-3 379 796**
**US-A-4 080 411**

(73) Titulaire: **SOCIETE NATIONALE DES POUDRES ET EXPLOSIFS, 12, quai Henri IV, F-75181 Paris Cédex 04 (FR)**

(72) Inventeur: **Dupont, Jean- Marcel, 9 rue Henri Dautriche, F-16017 Angoulême (FR)**

LIBER, STOCKHOLM 1988

EP 0 192 566 B1

## Description

La présente invention concerne un procédé pour réaliser le transfert spar coulée d'un fluide contenant au moins un composant explosible sensible aux chocs et/ou aux frottements.

Elle se rapporte plus particulièrement à un procédé et une installation pour réaliser la coulée du solvant de moulage dans la méthode de moulage de blocs de propergol.

On appelle méthode de moulage, en anglais "in-situ casting process" le procédé qui consiste à remplir le moule avec une poudre à mouler à base de nitrocellulose, et à couler sous pression ou sous pression réduite un solvant de moulage constitué par une huile nitrée telle que la nitroglycérine, par exemple. La poudre à mouler en absorbant le solvant de moulage gonfle et se gélatinise pour former une masse compacte, qui sera ensuite cuite pour obtenir le bloc final.

Il existe une autre méthode de fabrication appelée méthode globale, en anglais "slurry casting process" qui consiste à mélanger l'ensemble des composants du propergol, puis à couler ce mélange dans un moule et à cuire l'ensemble pour le faire prendre en masse.

Une description de ces deux procédés est donnée dans le brevet américain US-A-4 080 411. Le choix entre ces procédés est déterminé par les propriétés désirées pour le propergol final.

La méthode de moulage comprend trois étapes successives:

- Une première étape consistant à remplir le moule avec une poudre à mouler, pour obtenir une hauteur de poudre déterminée avec un taux de remplissage (masse de poudre par volume) également déterminé, ces deux caractéristiques déterminant d'une part la dimension du bloc et d'autre part ses caractéristiques mécaniques et de combustion.

- Une deuxième étape consistant à couler dans le moule un solvant de moulage pour imprégner totalement la poudre à mouler. Cette coulée est effectuée dans un moule soit sous pression réduite, soit sous pression atmosphérique, et de telle façon que le solvant de moulage chasse les gaz enfermés dans la poudre lors de sa progression dans le moule. Le solvant de moulage est absorbé par la poudre à mouler ce qui provoque le gonflement et la gélatinisation de celle-ci. La coulée du solvant de moulage est arrêtée quand la poudre à mouler est totalement noyée dans celui-ci, c'est-à-dire quand le niveau du solvant de moulage dans le moule est situé au-dessus du niveau de la poudre à mouler.

- La troisième étape consiste à effectuer le mûrissement et la cuisson des blocs moulés ainsi obtenus.

Le procédé de l'invention se rapporte à la mise en oeuvre de la deuxième étape de la méthode de moulage décrite ci-dessus, les premières et troisièmes étapes pouvant être effectuées selon des procédés connus de l'homme de métier.

Le transfert des fluides contenant un fluide explosible est généralement réalisé manuellement, soit par écoulement par gravité du fluide à travers un tuyau souple et contrôle du débit par pincement du tuyau, soit par déversement du fluide dans un récipient.

Ces opérations requièrent la manipulation du fluide explosible par une ou plusieurs personnes, et lors du transfert le fluide est soumis à des chocs ou frottements qui peuvent entraîner une explosion.

Dans le procédé de fabrication de blocs de propergol par la méthode de moulage plusieurs procédés sont mis en oeuvre pour effectuer la coulée du solvant de moulage dans un moule. Dans ces procédés, la coulée du solvant de moulage s'effectue sous pression, la fin de la coulée étant déterminée par observation visuelle du niveau du solvant dans le moule. Donc, ces procédés requièrent la présence continuelle de personnels dans l'atelier de coulée, ce qui présente un important inconvénient vis-à-vis de la sécurité. En outre, dans le cas d'une coulée simultanée dans plusieurs moules, les opérateurs doivent surveiller le niveau du solvant de moulage dans chaque moule et arrêter la coulée du solvant moule par moule, ce qui multiplie les manipulations sur un produit dangereux et peut même demander la présence de plusieurs opérateurs selon le nombre de moules remplis simultanément. Il a été également proposé des dispositifs pour permettre de détecter automatiquement le niveau de solvant de moulage dans le moule, comme, par exemple, des cellules photoélectriques. Toutefois, ces dispositifs ne suppriment pas l'obligation pour l'opérateur d'arrêter la coulée du solvant moule par moule.

De plus, dans ces différents procédés, il existe avant le début de la coulée du solvant de moulage, une grande différence de pression entre le réservoir de stockage de ce solvant et le moule. De ce fait, le solvant arrive en contact avec la poudre à mouler sous une vitesse d'écoulement relativement élevée, ce qui peut provoquer des chocs et des frottements et induire un détonnement de l'huile nitrée.

La présente invention a notamment pour but de remédier à ces inconvénients en proposant un procédé pour réaliser le transfert par coulée d'un fluide comprenant un composant explosible, par contrôle à distance du début et de la fin de cette coulée ainsi que du débit de celle-ci, peur améliorer de manière importante la sécurité. Ce procédé trouve une application dans la réalisation de la coulée du solvant de moulage dans le procédé de fabrication de blocs de propergol par la méthode de moulage. De plus, le procédé permet le remplissage simultané de plusieurs moules avec arrêt automatique de la coulée du solvant dans chaque moule et de manière indépendante par rapport aux autres moules.

A cet effet, l'invention propose un procédé pour réaliser le transfert d'un fluide contenant au moins un composant explosible depuis au moins un réservoir de stockage dans un ou plusieurs récipients mis sous pression réduite caractérisé en ce qu'on effectue la coulée du fluide dans le ou les récipients à partir d'au moins un réservoir de stockage, en commandant le début, la fin et le débit de la coulée du fluide par le contrôle de la différence de pression existant entre la pression régnant dans ledit réservoir de stockage et celle régnant dans chaque récipient.

Ce procédé permet de réaliser la coulée du solvant de moulage dans le procédé de fabrication d'un ou plusieurs blocs de propergol solide, par la méthode de moulage, consistant à alimenter dans un ou plusieurs moules, une quantité déterminée de poudre à mouler, à couler dans le ou lesdits moules mis sous pression réduite, un solvant de moulage, puis à cuire le ou les blocs ainsi obtenus pour gélatiniser la poudre à mouler.

Selon une autre caractéristique de l'invention, chaque moule et chaque réservoir sont reliés à une source de vide et une source d'alimentation en gaz comprimé.

De préférence, le solvant de moulage est contenu dans un seul réservoir de stockage relié à tous les moules.

Selon une autre caractéristique de l'invention, la fin de la coulée du solvant de moulage est commandée automatiquement et indépendamment pour chaque moule par l'élévation du niveau du solvant de moulage dans le moule, provoquant l'interruption de la communication entre la source de vide et le moule correspondant, celui-ci étant toujours en communication avec la source d'alimentation en gaz comprimé. Ainsi, le moule est mis sous une pression sensiblement égale à celle règnant dans le réservoir de stockage, ce qui provoque l'arrêt de la coulée du solvant de moulage.

Par ailleurs, le début de la coulée est réalisé, selon le procédé de l'invention, en équilibrant les pressions règnant dans le réservoir de stockage et chaque moule pour provoquer l'écoulement par gravité du solvant de moulage. Ainsi, la vitesse d'écoulement du solvant de moulage arrivant en contact avec la poudre à mouler est très faible, ce qui diminue les frottements et chocs et donc les risques d'explosion de l'huile nitrée.

Un autre objet de l'invention est une installation pour la mise en oeuvre du procédé de fabrication par la méthode de moulage de blocs de propergol, et qui comprend essentiellement un ou plusieurs moules, reliés à un réservoir de solvant de moulage, une alimentation de gaz comprimé et une source de vide, caractérisé en ce que le réservoir de solvant de moulage et les moules sont reliés d'une part à la source de vide, et d'autre part à l'alimentation en gaz comprimé. De plus, chaque moule est relié à la source de vide par l'intermédiaire d'une vanne à flotteur située dans la partie supérieure dudit moule.

Avantageusement, cette vanne à flotteur comprend un flotteur mobile disposé dans une cage fixée à l'extrêmité d'un conduit, l'autre extrêmité de ce conduit étant reliée à la source de vide.

Selon une autre caractéristique de l'invention et pour mieux contrôler la fin de la coulée du solvant de moulage, les moules sont reliés à la source d'alimentation en gaz comprimé par l'intermédiaire d'un orifice calibré.

D'autres caractéristiques, avantages et détails de l'invention apparaîtront plus clairement au vu de la description détaillée faite ci-dessous en référence aux dessins annexés donnés uniquement à titre d'illustration et dans lesquels,

- la figure 1 est un schéma synoptique de l'installation pour la mise en oeuvre du procédé de l'invention,
- la figure 2 est une vue en coupe longitudinale de la vanne à flotteur montée sur chaque moule, et
- la figure 3 est une vue schématique en perspective, avec arrachement, d'un moule.

Pour une meilleure compréhension, le procédé et l'installation conformes à l'invention sont décrits en détail ci-dessous dans le cadre de la mise en oeuvre de la seconde étape du procédé de fabrication de blocs de propergol par la méthode de moulage tel que décrit à la page 2.

Toutefois ce procédé et cette installation peuvent être mis en oeuvre pour le transfert de tout fluide comprenant au moins un composant explosible, dans au moins un récipient mis sous pression réduite.

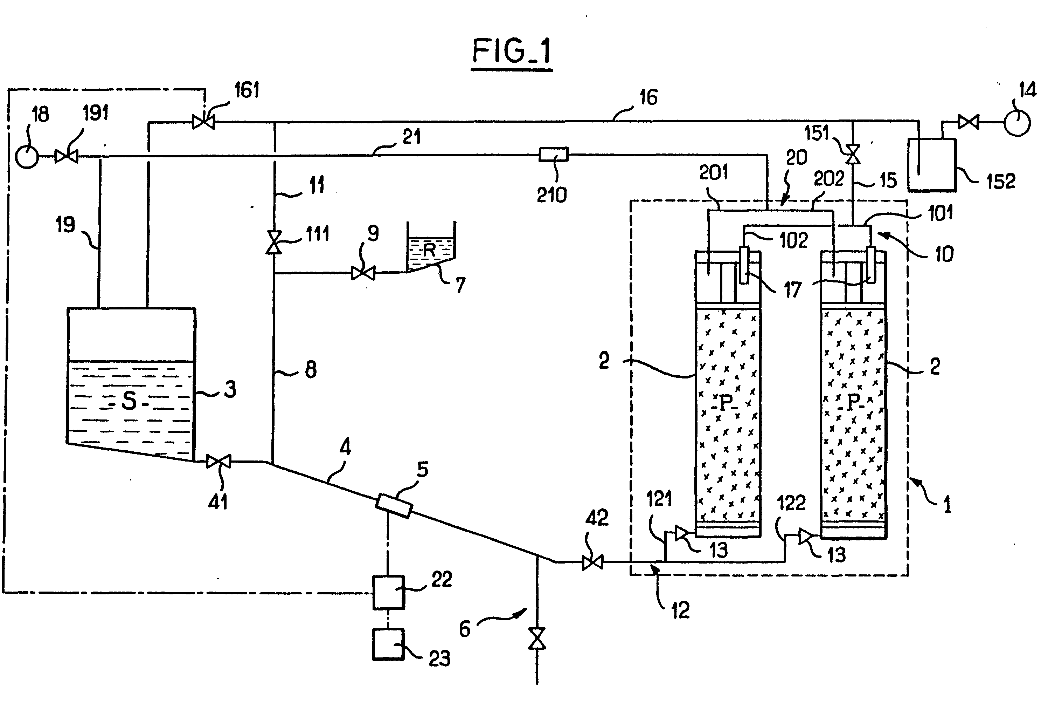

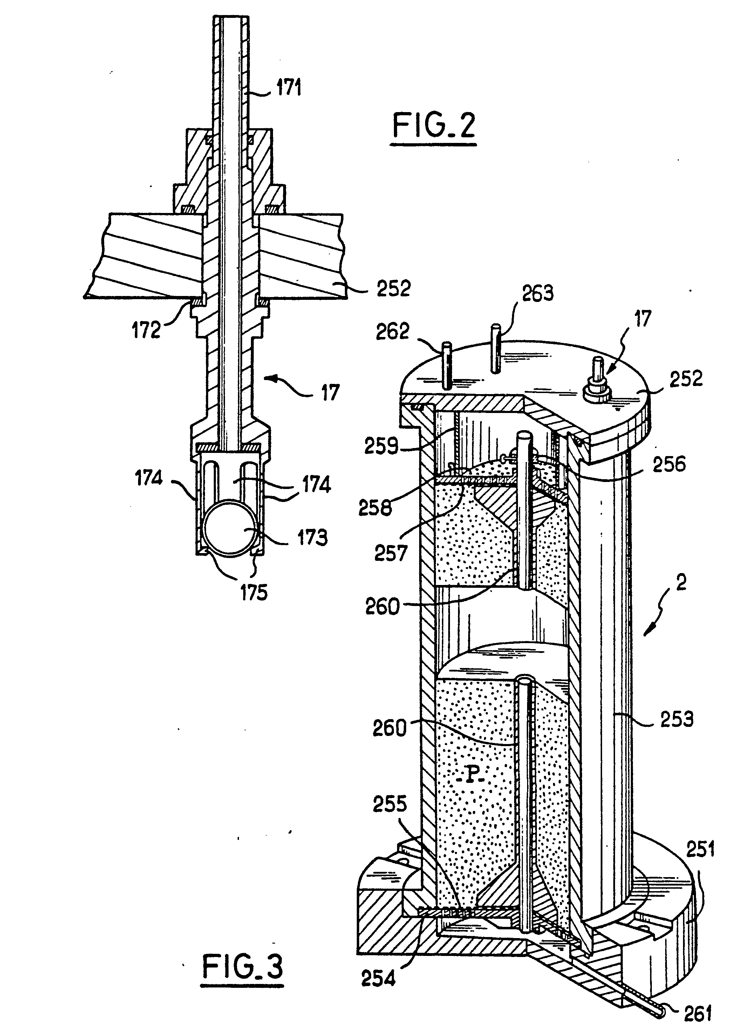

Une installation, conforme à l'invention, permettant de réaliser la coulée d'un solvant de moulage S dans des moules 2 déjà remplis avec une poudre à mouler P sera décrite en référence à la figure 1, la description sommaire d'un type de moule étant effectuée ci-dessous, en référence à la figure 3.

L'installation comprend des moules 2 disposés sur une palette 1, et un réservoir 3 contenant le solvant de moulage S.

Le nombre de moules 2 sur la palette 1 peut être quelconque, et par exemple peut être égal à un.

La poudre à mouler P est constituée essentiellement par des granulés de nitrocellulose qui sont généralement stabilisés et contiennent éventuellement des plastifiants et additifs balistiques.

Le solvant de moulage S est une huile nitrée flegmatisée, telle que, par exemple, de la nitroglycérine.

Le procédé de l'invention permet de fabriquer des blocs de propergol obtenu à partir de poudre à mouler et de solvant de moulage de compositions variables. Les propergols obtenus sont des propergols homogènes et généralement des propergols double base.

La palette 1 comprend, avantageusement un distributeur 12 de solvant 10 de moulage constitué par une arrivée de solvant et un certain nombre de conduits 121, 122 de distribution équipés de clapets anti-retour 13, et à chacun desquels est connecté un moule 2.

Le réservoir de stockage 3 de solvant de moulage S est relié au distributeur de la palette 1 par une conduite 4 d'alimentation et des vannes 41, 42. Un débitmètre 5 est avantageusement monté sur cette conduite 4.

En outre, cette conduite 4 comprend un système de purge 6 constitué par un piquage équipé d'une vanne, et est reliée à un réservoir 7 contenant un liquide de rinçage R par la conduite 8 et la vanne 9.

Conformément à l'invention, l'installation comprend une source de vide 14 reliée par les conduits 15, 16, et les vannes 151, 161, respectivement à un distributeur 10 de la palette 1 et au réservoir de stockage 3.

De préférence, la conduite 4 est reliée également à la source de vide 14 par la conduite 11 et la vanne 111.

Selon une caractéristique importante de l'invention, les conduits de distribution 101, 102 du distributeur 10 de la palette 1 sont reliés à la partie supérieure des moules 2, par l'intermédiaire d'une vanne à flotteur 17 fixée sur le couvercle du moule 2, dont un mode de réalisation est illustré à la figure 2.

Cette vanne à flotteur comprend un tube 171 monté hermétiquement sur le couvercle du moule 2, par exemple par un montage avec des joints d'étanchéité 172 comme illustré à la figure 2. Toutefois, cette vanne peut être également soudée sur le couvercle du moule 2, ou fixée par tout autre moyen. Le tube 171 est connecté par son extrêmité débouchante à l'extérieur du moule, à un des conduits du distributeur de vide 10 et comporte à son autre extrémité des pattes 174 définissant une cage dans laquelle peut se déplacer axialement un flotteur 173. Pour maintenir le flotteur 173 dans la cage, les pattes 174 comportent à leur extrémité une nervure 175. De plus, l'extrêmité du tube 171 a avantageusement une forme fonction de celle du flotteur 173, de manière à former un siège pour ledit flotteur afin d'assurer une obturation étanche du tube 171 quand le flotteur 173 est en position haute.

Le flotteur 173 a une densité inférieure à celle du solvant de moulage, et est par exemple une bille de téflon. La forme du flotteur n'est pas critique, et est adaptée pour obtenir une obturation la plus étanche possible du tube 171.

Il est préférable, de prévoir un piège 152 sur la canalisation 15, pour éviter toute aspiration de solvant de moulage dans la source de vide 14.

La source de vide 14 permet d'obtenir une dépression dans les moules 2 et le réservoir 3, de l'ordre de 50 mbar.

Selon l'invention, l'installation comprend une source d'alimentation 18 en gaz comprimé, par exemple de l'air comprimé. Cette source est reliée d'une part au réservoir de stockage 3 par la conduite 19 et aux moules 2 par la conduite 21, le distributeur 20 et les conduits de distribution 201, 202.

Comme la communication entre l'alimentation 18 en gaz comprimé et les moules 2 est maintenue ouverte pendant toute la phase de coulée du solvant de moulage, pour obtenir une dépression dans les mou les 2 la conduite 21 d'alimentation comprend un orifice calibré 210.

Les conduites 19 d'alimentation en gaz comprimé et 16 de source de vide reliées au réservoir de stockage comprennent respectivement des vannes 191, 161 permettant de faire varier la pression règnant dans le réservoir 3. Avantageusement ces vannes 191, 161 peuvent être commandées par asservissement à la mesure du débitmètre 5, au moyen d'un transmetteur 22 et un régulateur 23, par exemple. Ainsi, il est possible, par affichage du débit désiré, de programmer l'installation.

Les liaisons électriques de commande sont représentées en traits pointillés mixtes.

La pression de gaz comprimé alimenté est voisine de 1,5 bar environ. Toutefois, cette valeur n'est donnée qu'à titre indicatif et peut varier en fonction du débit souhaité de coulée de solvant de moulage, et de la nature du remplissage des moules.

En se référant à la figure 3, on décrira sommairement un moule 2 utilisé dans le procédé de l'invention. Toutefois, cette description n'est donnée qu'à titre d'exemple, et tous les types de moule connus peuvent être utilisés, après avoir adapté sur ceux-ci une prise de vide munie de la vanne à flotteur 17, et une prise d'arrivée de gaz comprimé.

Le moule 2 comprend une embase 251, un couvercle ou chapeau 252 et un tube 253.

Le tube comprend à sa partie inférieure un disque perforé 254 formant un filtre sur lequel est disposée une toile métallique 255. Cet ensemble disque-grille forme la plaque de support de la poudre à mouler P alimentée dans le moule. De manière analogue, on dispose sur la poudre à mouler une toile métallique 257 et un disque perforé 258 formant le filtre superieur. Pour maintenir la poudre à mouler dans le moule, on interpose entre le couvercle 252 et le filtre supérieur une entretoise 259, le couvercle étant fixé sur le tube 253 par boulonnage ou bridage, par exemple.

Dans le mode de réalisation illustré à la figure 3, un noyau central 260 en forme d'étoile est disposé entre les deux filtres, pour ainsi réaliser un bloc de propergol à combustion radial. Une butée 256 est prévue sur la partie supérieure de ce noyau central.

L'alimentation du solvant de moulage est effectuée par un alèsage radial 261 de l'embase 251.

Le couvercle comprend un piquage 262 pour l'arrivée du gaz comprimé 10 et est équipé avec la vanne à flotteur 17 illustrée à la figure 2. Avantageusement le couvercle 252 peut comprendre un troisième piquage 263, fermé par un bouchon pendant la coulée du solvant de moulage, pour permettre l'aspiration de l'excès de solvant de moulage surnageant au-dessus du filtre supérieur.

Comme exemple d'autres types de moules qui peuvent être utilisés dans l'installation de l'invention, on peut citer ceux décrits dans les brevets français FR-A-1 179 415, FR-B-2 042 850, FR-A-1 530 751.

On décrira maintenant le fonctionnement de l'installation en se référant à la figure 1.

Les moules 2 remplis de poudre à mouler P sont disposés sur la palette 1 et reliés à la conduite d'alimentation 4 du solvant de moulage, ainsi qu'à la source 18 de gaz comprimé et la source de vide 14, par l'intermédiaire des distributeurs 12, 20, 10.

De même, le réservoir 3 de solvant de moulage est relié à la conduite 4 et aux sources 14, 18 de vide et de gaz comprimé.

A cet instant, on met sous pression réduite le moule 2, le réservoir 3 de solvant de moulage, et la conduite 4 d'alimentation. Puis on ouvre les vannes 41, 42 pour permettre l'écoulement par gravité du solvant de moulage dans la conduite 4, jusqu'aux moules 2. Ainsi, le contact entre le solvant de moulage et la poudre à mouler s'effectue sans choc, et l'écoulement du solvant peut être détecté par le débitmètre.

Quand le solvant de moulage est en contact avec la poudre à mouler, on ferme la communication entre le réservoir 3 de stockage et la source de vide 14 et on ouvre la communication entre la source 18 de gaz comprimé et le réservoir 3 de stockage ainsi que les moules 2. La pression règnant dans le réservoir de stockage augmente, tandis que les moules sont maintenus en dépression par l'aspiration de la source 14 de vide, et grâce à l'orifice calibré 210 prévu sur la conduite 21 d'alimentation en gaz comprimé. Le débit d'alimentation du solvant de moulage augmente, et peut être contrôlé par lecture du débitmètre et règlage de la pression dans le réservoir 3 de stockage.

Quand le niveau du solvant de moulage dans un moule 2 arrive au-dessus du filtre supérieur du moule, il provoque la montée du flotteur 173 de la vanne 17 dans sa cage. Sous l'effet de l'aspiration dans le tube 171, le flotteur 173 vient s'appliquer sur le siège de la vanne provoquant ainsi la coupure de la communication avec la source de vide 14. Comme du gaz comprimé est alimenté en permanence dans le moule, la pression règnant dans celui-ci augmente, et s'équilibre avec celle règnant dans le réservoir 3, provoquant l'arrêt automatique de la coulée du solvant de moulage dans le moule.

Pour éviter tout retour de solvant de moulage dans un autre moule, ou dans la conduite 4 d'alimentation de solvant, un clapet anti-retour 13 est prévu dans chaque conduit 121, 122 du distributeur 12.

Le procédé d'arrêt de la coulée du solvant de moulage se répète dans chaque moule 2, sans influence sur la coulée du solvant dans les autres moules 2 disposés sur la palette 1.

Quand tous les moules sont remplis, la vanne 41 est fermée, et on vidange la conduite 4 par ouverture de la purge 6. La conduite 4 est ensuite rincée par ouverture de la vanne 9.

Toutes les opérations d'ouverture et de fermeture des vannes décrites ci-dessus sont commandées à distance, permettant ainsi aux personnels de ne pas être présents dans l'atelier pendant toute l'opération de coulée du solvant de moulage.

Ainsi, dans le procédé de l'invention, le personnel n'est présent dans l'atelier que pour effectuer le branchement et le débranchement des distributeurs de solvant de moulage, de vide et de gaz comprimé de la palette 1. De plus, lors du débranchement des moules, les conduits, notamment la conduite 4 ne contiennent plus de solvant de moulage, ce qui améliore encore la sécurité.

Les blocs ainsi moulés subissent ensuite un traitement thermique pour compléter la gélatinisation de la poudre à mouler. Ce traitement thermique, connu de l'homme de métier, peut être réalisé après démoulage, ou avant démoulage. De préférence, on effectue un premurissement avant démoulage, mais après avoir soutiré l'excès de solvant de moulage, par aspiration à travers le piquage 263 (figure 3). Puis après démoulage, les blocs sont soumis à un traitement thermique de cuisson.

Le procédé de l'invention permet donc de contrôler à distance la coulée du solvant de moulage dans les moules, et cela quelque soit le nombre de moules remplis simultanément, et la quantité de solvant nécessaire pour les remplir. Ainsi, il est possible de réaliser simultanément la coulée de solvant de moulage dans deux moules de tailles différentes, la coulée de solvant dans le plus petit moule s'arrêtant automatiquement sans influencer la coulée du solvant dans l'autre moule.

Il en est de même, si la vitesse d'alimentation du solvant de moulage dans les moules est différente.

Par ailleurs, comme la manipulation des vannes s'effectue à distance, l'ensemble du procédé de coulée du solvant de moulage peut être automatisé.

## Revendications

1. Procédé pour réaliser le transfert d'un fluide contenant au moins un composant explosible, depuis un réservoir de stockage dans un ou plusieurs récipients, mis sous pression réduite, caractérisé en ce qu'on effectue la coulée dudit fluide (S) dans le ou les récipients (2) à partir d'au moins réservoir (3) de stockage, en commandant le début, la fin et le débit de la coulée du fluide par contrôle de la différence de pression existant entre la pression règnant dans ledit réservoir (3) de stockage et celle règnant dans chaque récipient.

2. Procédé de fabrication par la méthode de moulage d'un ou plusieurs blocs de propergol consistant à remplir des moules ou récipients avec une quantité déterminée de poudre à mouler, à couler dans lesdits moules mis sous pression réduite, un fluide contenant un composant explosible ou solvant de moulage, puis à cuire les blocs ainsi moulés pour gélatiniser la poudre à mouler, caractérisé en ce qu'on effectue la coulée du solvant de moulage (S) dans le ou les moules (2) à partir d'au moins un réservoir (3) de stockage selon le procédé de la revendication 1.

3. Procédé selon la revendication 1 ou 2, caractérisé en ce qu'on effectue la coulée du solvant de moulage (5) à partir d'un réservoir de stockage (3) unique.

4. Procédé selon l'une des revendications précédentes, caractérisé en ce qu'on effectue le début de la coulée du solvant de moulage (S) par gravité en mettant sous pression réduite les moules (2) précités et le réservoir (3) de stockage, et en équilibrant ces pressions.

5. Procédé selon l'une des revendications précédentes, caractérisé en ce que, après le début de la coulée du solvant de moulage, le réservoir (3) de stockage et les moules (2) sont mis en communication avec la source (18) précitée de gaz comprimé, ledit réservoir de stockage étant isolé de la source de vide (14).

6. Procédé selon l'une des revendications précédentes, caractérisé en ce que la fin de la coulée du solvant de moulage dans chaque moule (2) précité est commandée automatiquement et indépendemment pour chaque moule, par l'élévation du niveau du solvant de moulage (S) dans ledit moule provoquant l'isolation du moule par rapport à la source de vide (14).

7. Installation pour la mise en oeuvre du procédé de fabrication par la méthode de moulage selon l'une des revendications précédentes, comprenant un ou plusieurs moules, au moins un réservoir de stockage du solvant de moulage relié aux moules (2), une source de gaz comprimé et une source de vide, caractérisée en ce que le réservoir (3) de stockage de solvant de moulage et les moules (2) sont reliés à la source de vide (14) et à l'alimentation en gaz comprimé, et en ce que chaque moule (2) est relié à ladite source de vide (14) par une vanne (17) à flotteur située dans la partie supérieure du moule (2).

8. Installation selon la revendication 7, caractérisée en ce que les moules (2) précités sont reliés à la source (18) de gaz comprimé à travers un orifice calibré (210).

9. Installation selon la revendication 7 ou 8, caractérisée en ce que la vanne (17) précitée à flotteur comprend un flotteur (173) obturateur disposé mobile dans une cage fixée à l'extrémité d'un conduit (171), l'autre extrêmité dudit conduit étant relié à la source de vide (14).

10. Installation selon l'une des revendications 7 à 9, caractérisée en ce que dans chaque conduit (121, 122) d'alimentation de solvant de moulage dans les moules (2) précités est prévu un clapet anti-retour (13).

## Patentansprüche

1. Verfahren zur Überführung eines mindestens einen explosiven Bestandteil enthaltenden Fluids aus einem Lagerreservoir in einen oder mehrere unter vermindertem Druck stehende Behälter,
dadurch gekennzeichnet, daß
das Gießen des Fluids (S) in den oder die Behälter (2) aus mindestens einem Lagerreservoir (3) durch Steuerung des Anfangs, des Endes und des Durchsatzes des Gießens des Fluids durch Regulierung des Druckunterschieds zwischen dem Druck im Lagerreservoir (3) und dem in jedem Behälter durchgeführt wird.

2. Verfahren zur Herstellung durch Gießen mindestens eines Propergolblocks, wobei die Formen oder Behälter mit einer bestimmten Menge an zu formenden Pulver gefüllt werden, in die unter vermindertem Druck stehenden Formen ein einen explosiven Bestandteil enthaltendes Fluid oder ein Gießlösungsmittel eingegossen wird und die so geformten Blöcke zur Gelatinisierung des zu formenden Pulvers gehärtet werden,
dadurch gekennzeichnet, daß
das Gießen des Gießlösungsmittels (5) in die Form(en) (2) aus mindestens einem Lagerreservoir (3) gemäß Anspruch 1 durchgeführt wird.

3. Verfahren nach Anspruch 1 oder 2,
dadurch gekennzeichnet, daß
das Gießen des Gießlösungsmittels (5) aus einem einzigen Lagerreservoir (3) durchgeführt wird.

4. Verfahren nach einem der vorstehenden Ansprüche,
dadurch gekennzeichnet, daß
der Anfang des Gießens des Gießlösungsmittels (S) durch Schwerkraft durch Vermindern des Drucks in den Formen (2) und im Lagerreservoir (3) und Ausgleichen dieser Drücke durchgeführt wird.

5. Verfahren nach einem der vorstehenden Ansprüche,
dadurch gekennzeichnet, daß
nach dem Anfang des Gießens des Gießlösungsmittels das Lagerreservoir (3) und die Formen (2) mit einer Quelle (18) für komprimiertes Gas verbunden werden, wobei das Lagerreservoir von der Vakuumquelle (14) getrennt ist.

6. Verfahren nach einem der vorstehenden Ansprüche,
dadurch gekennzeichnet, daß
das Ende des Gießens des Gießlösungsmittels in jede Form (2) automatisch und unabhängig für jede Form durch die Erhöhung des Niveaus des Gießlösungsmittels (S) in der Form gesteuert wird, wodurch die Form von der Vakuumquelle (14) getrennt wird.

7. Vorrichtung zur Durchführung des Herstellungsverfahrens durch Gießen nach einem der vorstehenden Ansprüche, mit einer oder mehreren Formen, mindestens einem, mit den Formen (2) verbundenen Lagerreservoir für das Gießlösungsmittel, einer Quelle für komprimiertes Gas und einer Vakuumquelle,
dadurch gekennzeichnet, daß
das Lagerreservoir (3) für das Gießlösungsmittel und die Formen (2) mit der Vakuumquelle (14) und der Versorgung für komprimiertes Gas verbunden sind und jede Form (2) mit der Vakuumquelle (14) über ein Schwimmerventil (17) im oberen Teil der Form (2) verbunden ist.

8. Vorrichtung nach Anspruch 7,
dadurch gekennzeichnet, daß
die Formen (2) mit der Quelle (18) für komprimiertes Gas über eine geeichte Öffnung (210) verbunden sind.

9. Vorrichtung nach Anspruch 7 oder 8,
dadurch gekennzeichnet, daß
das Schwimmerventil (17) einen Schwimmerverschluß (173) umfaßt, der beweglich in einem Gehäuse am Ende eines Rohrs (171) befestigt ist, wobei das andere Ende des Rohrs mit der Vakuumquelle (14) verbunden ist.

10. Vorrichtung nach einem der Ansprüche 7 bis 9,
dadurch gekennzeichnet, daß
jedes Versorgungsrohr (121, 122) für das Gießlösungsmittel in die Formen (2) ein Rückschlagventil (13) aufweist.

**Claims**

1. A process for carrying out the transfer of a fluid containing at least one explosive constituent, from a storage tank in one or more containers, placed under reduced pressure, characterized in that the pouring of the said fluid (S) in the container(s) (2) from at least one storage tank (3) is carried out by determining the start end and the flow rate of the pouring of the fluid by controlling the difference in pressure between the pressure in the said storage tank (3) and the pressure in each container.

2. A manufacturing process by the casting method of one or more blocks of propellant consisting in filling the molds or the containers with a given quantity of casting powder, pouring into the said molds placed under reduced pressure, a fluid containing an explosive constituent or casting solvent, then baking the blocks thus cast so as to gelatinize the casting powder, characterized in that the pouring of the casting solvent (S) is carried out in the mold(s) (2) from at least one storage tank (3) according to the process of claim 1.

3. Process according to claim 1 or 2, characterized in that the pouring of the casting solvent (S) is carried out from a single storage tank (3).

4. Process according to one of the previous claims, characterized in that the start of the pouring of the casting solvent (S) is achieved by gravity by placing the aforementioned molds (2) and the storage tank (3) under reduced pressure, and by balancing these pressures.

5. Process according to one of the previous claims, characterized in that, after the start of the pouring of the casting solvent, the storage tank (3) and the molds (2) are connected to the aforementioned compressed gas source (18), the said storage tank being isolated from the vacuum source (14).

6. Process according to one of the previous claims, characterized in that the end of the pouring of the casting solvent into each afore-mentioned mold (2) is controlled automatically and independently for each mold, by raising the level of the casting solvent (S) in the said mold causing the isolation of the mold relative to the vacuum source (14).

7. Installation for the implementation of the manufacturing process by the casting method according to one of the preceding claims, comprising one or more molds, at least one storage tank for casting solvent connected to the molds (2), a compressed gas source and a vacuum source, characterized in that the storage tank (3) of the casting solvent and the molds (2) are connected to the vacuum source (14) and the compressed gas supply, and in that each mold (2) is connected to the said vacuum source (14) by a float valve (17) situated in the upper part of the mold (2).

8. Installation according to claim 7, characterized in that the aforementioned molds (2) are connected to the compressed gas source (18) via a calibrated opening (210).

9. Installation according to claim 7 or 8, characterized in that the afore-mentioned float valve (17) comprises a sealing float (173) arranged so as to be mobile in a cage fixed to the end of a pipe (171), the other end of the said pipe being connected to the vacuum source (14).

10. Installation according to one of the claims 7 to 9, characterized in that in each casting solvent supply pipe (121, 122) in the afore-mentioned molds (2) a non-return valve (13) is provided.

# FIG_1

0 192 566

## FIG.2

## FIG.3